# DEMANDE DE BREVET EUROPEEN

(11) **EP 4 825 469 A1**
(43) Date de publication de la demande: **21.10.2026**
(21) Numéro de dépôt: 26170195.7
(22) Date de dépôt: 01.04.2026
(51) Int. Cl.: B01D 53/047, B01D 53/04, B01D 53/26, F23J 15/00, F25J 3/02, F25J 3/06

(54) **PROCÉDÉ DE CAPTURE DE CO2**

(30) Priorité: 10.04.2025 FR 2503818
(71) Demandeur: L'Air Liquide, Société Anonyme pour l'Etude et l'Exploitation des Procédés Georges Claude, 75007 Paris (FR)
(72) Inventeur: SONNENDRUCKER, Antoine, 75007 PARIS (FR); LECLERC, Mathieu, 75007 PARIS (FR); PAGES, Baptiste, 75007 PARIS (FR)
(74) Mandataire: Air Liquide

(57) **Abrégé**

Dans un procédé de capture de CO2 utilisé pour purifier le CO2 présent dans un premier gaz de combustion, pour permettre à l'unité d'être utilisée pour traiter un deuxième gaz de combustion (1bis) à concentration plus élevée, avant les modifications, le premier gaz de combustion est comprimé dans un premier compresseur (C1), puis envoyé à une unité de préconcentration (S1) pour produire un troisième gaz (3) qui est envoyé de l'unité de préconcentration à un deuxième compresseur et du deuxième compresseur à une unité de séparation de CO2 (S2) et suite aux modifications, l'unité de capture de CO2 est utilisée pour purifier le CO2 présent dans le deuxième gaz de combustion, le deuxième gaz étant comprimé dans le deuxième compresseur (C2) et envoyé à l'unité de séparation de CO2 pour s'y séparer sans avoir été enrichi en CO2.

## Description

La présente invention est relative à un procédé de capture de CO2 un procédé de modification d'une unité de capture de CO2 et à un appareil de capture de CO2 adapté à être modifié
La combustion de ressources énergétiques fossiles (charbon, gaz naturel, pétrole), de ressources énergétiques renouvelables (biomasse) ou de dérivés de ces ressources entraîne la formation de molécules de dioxyde de carbone ou CO₂.

Trois familles de procédés de capture sont souvent envisagées :
- la capture avant la combustion : précombustion ;
- la capture après une combustion classique (à l'air), avec peu ou pas de modification du procédé de combustion : postcombustion ;
- la capture après une combustion à l'oxygène pur : oxycombustion.

La conception de l'unité de capture du carbone devrait, selon l'invention, anticiper la future mise à niveau de l'émetteur en amont (cimenterie ou centrale électrique, par exemple), qui passera de la capture postcombustion à capture d'un gaz de combustion résultant d'une combustion en présence d'oxygène (soit d'un mélange oxygène-air soit en présence d'oxygène sans air dit oxycombustion). Ce nouveau mode de fonctionnement conduirait à des gaz de combustion enrichis en CO2 (par exemple supérieure à 50% mol CO2 ou typiquement supérieure à 70% mol CO2 en base sèche) et pourrait mettre en péril les capacités opérationnelles de l'unité de capture du carbone installée (conçue pour la capture post-combustion avec une concentration de gaz de combustion inférieure à 50% mol CO2 et typiquement inférieure à 25% mol CO) en base sèche. L'installation de captage du CO2 doit être conçue dès le début pour maximiser le nombre d'équipements qui peuvent être réutilisés après la modernisation de l'émetteur en amont. En pratique, les compresseurs, les adsorbeurs et les sections cryogéniques seront conçus en conséquence pour pouvoir passer de la postcombustion à l'oxycombustion.

Une unité de capture du carbone pour la capture post-combustion (sur une concentration de gaz de combustion inférieure à 50% mol CO2 et typiquement inférieure à 25% mol CO2 en base sèche est bien connue et référencée. Une unité de capture du carbone avec une concentration de gaz de combustion supérieure à 50% mol CO2 ou typiquement supérieure à 70% mol CO2 en base sèche est également bien connue et référencée.

Les autorités locales soutiennent la réduction des émissions de carbone à court terme (soit en offrant des subventions, soit en appliquant des pénalités : par exemple, la taxe carbone). Ces autorités exigent des actions rapides de la part des émetteurs pour atteindre les objectifs de réduction en temps voulu, parfois avant d'avoir accès aux meilleures solutions techniques optimisées en cours de développement. Par exemple, aujourd'hui, la solution disponible pour une cimenterie de pointe est de capturer le CO2 directement à partir de ses gaz de combustion à faible concentration (typiquement <25% mol CO2) alors que dans un avenir proche, une modernisation du four pourrait permettre l'injection d'oxygène (au lieu d'air) et augmenter la concentration des gaz de combustion (typiquement jusqu'à 70% mol CO2) pour laquelle une conception différente de l'unité de capture du carbone améliorerait radicalement l'efficacité de la capture du carbone. Deux options sont disponibles pour cet émetteur :
- Soit reporter son investissement dans le captage du carbone pour attendre la mise au point définitive de la solution technique de réaménagement du four et investir dans l'unité de captage du carbone en même temps que le réaménagement du four. Cela peut ne pas être acceptable en fonction des exigences des autorités locales et des objectifs de réduction des émissions de carbone du propriétaire
- Soit investir d'abord dans une solution de capture du carbone après combustion qui fonctionnerait jusqu'à la finalisation de la solution technique de modernisation du four pour l'injection d'oxygène et, dans un deuxième temps, dans une modernisation complète du four. Mais cela signifierait qu'il faudrait également exploiter une nouvelle unité de capture du carbone (parce que la conception initiale ne serait plus compatible avec la nouvelle composition des gaz de combustion).

Un but de l'invention est d'anticiper dès aujourd'hui la conception de l'unité de capture du carbone afin de pouvoir minimiser les travaux nécessaires sur cette unité dans le cas d'une future mise à niveau de l'émetteur.

### Description de l'invention

L'invention consiste en un procédé de modification d'une unité de capture de CO2 pour gérer des changements de concentration et de purification d'un gaz de combustion.

Selon un objet de l'invention, il est prévu un procédé de capture de CO2 dans une unité de capture pour purifier le CO2 présent dans un premier gaz de combustion à concentration de CO2 inférieure à 45%mol et typiquement inférieure à 30%mol provenant d'au moins un émetteur et pour traiter un deuxième gaz de combustion à concentration plus élevée, à savoir supérieure à 50%mol et typiquement supérieure à 70%mol de concentration de CO2 dans la même unité de capture suite à des modifications dans lequel
i.Selon un premier mode de fonctionnement, le premier gaz de combustion est comprimé dans un premier compresseur, le deuxième gaz n'étant pas envoyé au premier compresseur, le premier gaz comprimé étant optionnellement séché par des sécheurs, puis envoyé à une unité de préconcentration pour produire un troisième gaz (4) contenant au moins 50% mol CO2, voire au moins 70% CO2 et le troisième gaz est envoyé de l'unité de préconcentration à un deuxième compresseur et du deuxième compresseur à une unité de séparation de CO2 par condensation partielle et/ou distillation et/ou solidification pour produire du CO2 comme produit à une concentration de CO2 voulue et
ii.Selon un deuxième mode de fonctionnement, le premier gaz n'est plus envoyé au premier compresseur, les connexions de l'unité de capture de CO2 sont modifiées pour ne pas envoyer de deuxième gaz à l'unité de préconcentration et ne plus envoyer de deuxième gaz de l'unité de préconcentration à l'unité de séparation et ensuite l'unité modifiée est utilisée pour purifier le CO2 présent dans le deuxième gaz de combustion provenant de préférence de l'au moins un émetteur, le deuxième gaz étant comprimé dans un compresseur et envoyé à l'unité de séparation de CO2 par condensation partielle et/ou distillation et/ou solidification pour s'y séparer sans avoir été enrichi en CO2, dans lequel selon le deuxième mode de fonctionnement
   a) le deuxième gaz est comprimé dans le premier compresseur avant d'être envoyé à l'unité de séparation, sans avoir été comprimé entre le premier compresseur et l'unité de séparation ou
   b) le deuxième gaz est comprimé dans le deuxième compresseur, sans avoir été comprimé dans le premier compresseur ou un autre compresseur.

Selon un objet de l'invention, il est prévu un procédé de modification d'une unité de capture de CO2 utilisé pour purifier le CO2 présent dans un premier gaz de combustion à concentration de CO2, inférieure à 45%mol et typiquement inférieure à 30%mol provenant d'au moins un émetteur pour permettre à l'unité d'être utilisée pour traiter un deuxième gaz de combustion à concentration plus élevée, à savoir supérieure à 50%mol et typiquement supérieure à 70%mol de concentration de CO2 dans lequel
i) avant la modification, le premier gaz de combustion est comprimé dans un premier compresseur, optionnellement séché par des sécheurs puis envoyé à une unité de préconcentration pour produire un troisième gaz contenant au moins 50% mol CO2, voire au moins 70% CO2 et le troisième gaz est envoyé de l'unité de préconcentration à un deuxième compresseur et du deuxième compresseur à une unité de séparation de CO2 par condensation partielle et/ou distillation et/ou solidification pour produire du CO2 comme produit à une concentration de CO2 voulue et
ii) suite à la modification, l'unité de capture de CO2 est utilisée pour purifier le CO2 présent dans le deuxième gaz de combustion provenant de préférence de l'au moins un émetteur, le deuxième gaz étant comprimé dans un compresseur et envoyé à l'unité de séparation de CO2 par condensation partielle et/ou distillation et/ou solidification pour s'y séparer sans avoir été enrichi en CO2 ou comprimé entre les sécheurs et l'unité de séparation dans lequel selon le deuxième mode de fonctionnement
   a) le deuxième gaz est comprimé dans le premier compresseur avant d'être envoyé à l'unité de séparation ou
   b) le deuxième gaz est comprimé dans le deuxième compresseur, sans avoir été comprimé dans le premier compresseur.

Selon d'autres caractéristiques optionnels :
- suite à la modification des connexions, l'unité de capture de CO2 est utilisée selon le deuxième mode de fonctionnement pour purifier le CO2 présent dans le deuxième gaz de combustion provenant de préférence de l'au moins un émetteur et contenant de l'eau, le deuxième gaz étant comprimé dans un compresseur, séché dans les sécheurs et envoyé à l'unité de séparation de CO2 par condensation partielle et/ou distillation et/ou solidification pour s'y séparer sans avoir été enrichi en CO2 ou comprimé entre les sécheurs et l'unité de séparation dans lequel
   c) le deuxième gaz est comprimé dans le premier compresseur avant d'être séché dans les sécheurs ou
   d) le deuxième gaz est comprimé dans le deuxième compresseur, sans avoir été comprimé dans le premier compresseur, avant d'être séché dans les sécheurs et de nouveau comprimé dans le deuxième compresseur.

Selon d'autres objets facultatifs :
- -l'au moins un émetteur comprend un four à ciment, une unité de production de chaux et/ou un haut fourneau d'une aciérie.
- la concentration en CO2 du deuxième gaz de combustion est égale ou supérieure à celle du troisième gaz.
- après la modification, un gaz, produit par l'unité de séparation de CO2, qui est appauvri en CO2 par rapport au gaz alimentant l'unité de séparation de CO2 par condensation partielle et/ou distillation et/ou solidification est envoyé se séparer dans l'unité de préconcentration formant un gaz auxiliaire contenant plus de CO2 que le gaz appauvri en CO2 et le gaz auxiliaire est envoyé pour être pressurisé au premier compresseur pour la variante a) ou c) ou au deuxième compresseur pour la variante b) ou d).
- le deuxième gaz contient de l'eau et le deuxième compresseur est en acier inoxydable avant les modifications.
- aucun gaz n'est comprimé dans le deuxième compresseur pour la variante a) ou c) ou dans le premier compresseur pour la variante b) ou d).
- pour la variante a) ou c), le premier compresseur comprend un premier étage de compression en parallèle avec un deuxième étage de compression et dans lequel avant les modifications le premier gaz est comprimé par le premier et deuxième étage en même temps et après les modifications, le deuxième gaz est comprimé par le premier étage mais pas par le deuxième étage.
- le débit du deuxième gaz est inférieur à celui du premier gaz.

Selon un objet de l'invention, il est prévu un appareil de capture de CO2 utilisé pour purifier le CO2 présent dans un premier gaz de combustion comprenant un premier compresseur, des sécheurs, une unité de préconcentration, un deuxième compresseur, une unité de séparation de CO2 par condensation partielle et/ou distillation et/ou solidification, des moyens pour envoyer un gaz du premier compresseur aux sécheurs, des moyens pour envoyer un gaz des sécheurs à l'unité de préconcentration, des moyens pour envoyer un gaz enrichi en CO2 de l'unité de préconcentration au deuxième compresseur, des moyens pour envoyer le gaz comprimé dans le deuxième compresseur à l'unité de séparation pour produire du CO2 comme produit à une concentration de CO2 voulue caractérisé en ce que le deuxième compresseur est en acier inoxydable et comprend un étage intermédiaire relié à une conduite d'amenée de fluide et à une conduite de sortie de fluide pour amener du fluide directement à la sortie de l'étage intermédiaire sans être passé par l'étage intermédiaire du deuxième compresseur en amont de l'étage intermédiaire et à une conduite de sortie de fluide pour sortir du fluide directement en amont de l'entrée de l'étage intermédiaire après passage dans un étage du deuxième compresseur en amont de l'étage intermédiaire.

En d'autre termes, l'appareil prévu pour une séparation avant les modifications est déjà prévu pour être modifié car le deuxième compresseur utilisé pour comprimer un gaz sec est déjà prévu pour comprimer un gaz humide sur ces premiers étages, la présence d'une entrée et une sortie intermédiaire facilitant les modifications.

De préférence, le premier compresseur comprend un premier étage de compression en parallèle avec un deuxième étage de compression.

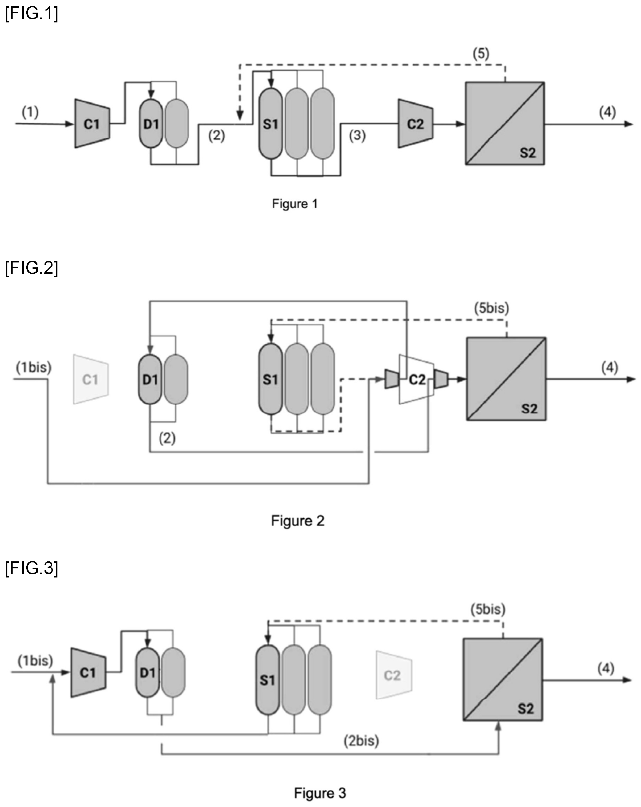

[FIG.1] illustre l'agencement typique d'une unité de capture du carbone pour des gaz de combustion contenant typiquement de l'eau, entre 15% et 50% mol% de CO2 en base sèche et au moins un composant plus léger que le CO2 (par exemple 30% mol% de CO2 en base sèche provenant des gaz de combustion d'une cimenterie). Le premier gaz de combustion humide 1 est comprimé dans un premier compresseur C1, puis séchés dans un récipient D1, généralement une unité d'adsorption à bascule de température TSA. Le premier gaz de combustion comprimé est ensuite pré-concentré formant un gaz 3 contenant entre 50% et 75% mol% (par exemple 70%mol CO2) dans une unité de pré-concentration S1, typiquement une unité d'adsorption à bascule de pression de type PSA. Le gaz 3 est finalement envoyé dans une dernière étape de compression C2, avant d'être envoyé dans une unité de séparation S2, typiquement un procédé de condensation partielle et/ou de distillation et/ou de solidification afin de produire du CO2 à une pureté ciblée (par exemple un produit final 4 sous forme de flux gazeux de CO2 pur (supérieur à 99,9%mol) à 10 bar. L'unité S2 produit également un fluide 5 appauvri en CO2 par rapport au gaz 3.

Dans le cas d'une réorganisation de l'émetteur en amont conduisant à un enrichissement de la teneur en CO2 mais avec toujours le même flux partiel de CO2 (par exemple, la réorganisation du four à ciment en amont de la combustion d'air à la combustion d'oxygène pur augmentant la concentration de CO2 dans le gaz de combustion appelé deuxième gaz de combustion 1bis contenant de l'eau, au moins un composant plus léger que le CO2 ainsi que 90 %mol CO2 en base sèche dans les conditions de début d'exploitation (SOR) et à 75 %mol CO2 dans les conditions de fin d'exploitation (EOR) pour tenir compte de l'augmentation de l'entrée d'air parasite avant les grands arrêts), il est nécessaire de modifier le procédé de la [FIG.1].

L'invention sera décrite de manière plus détaillée en se référant aux figures où : [FIG.2] représente une variante d'un procédé modifié selon l'invention [FIG. 3] représente une autre variante d'un procédé modifié selon l'invention L'objectif des procédés de ces deux figures est d'optimiser la purification du CO2 avec la nouvelle composition des gaz de combustion. L'idée pour ces deux figures est de réutiliser le plus d'équipements possible et de limiter l'investissement initial sur la [FIG.1] pour rendre ce changement faisable.

[FIG.2] représente une variante d'un procédé de la [FIG.1] modifiée selon l'invention.

Le deuxième gaz 1bis à concentration plus élevée, à savoir supérieure à 50%mol et typiquement supérieure à 70%mol de concentration de CO2, est envoyé directement au compresseur C2, sans passer par le premier compresseur C1 ou un autre compresseur et l'étape de préconcentration S1. Le compresseur C2 doit donc être conçu pour le gaz sec 3 de la [FIG.1] et le gaz humide 1 bis du [FIG.2], ce qui entraîne un choix différent de matériaux, par exemple de l'acier inoxydable pour C2. Afin de sécher le gaz de combustion humide 1bis, les récipients de séchage D1 de la [FIG.2] peuvent être alimentés par un gaz extrait à un étage intermédiaire du compresseur C2 afin de conserver la même pression de conception que pour D1 de la [FIG.1]. Le gaz séché est envoyé du sécheur D1 à un étage final ou intermédiaire du compresseur C2 et de là, à l'unité de séparation S2 pour s'y séparer. Le compresseur C2 est déjà prévu avant les modifications comprend un étage intermédiaire relié à une conduite d'amenée de fluide et à une conduite de sortie de fluide, pour permettre de sortir le fluide comprimé à un niveau intermédiaire et de réintroduire le fluide comprimé à un niveau intermédiaire après passage dans le sécheur D. Ces conduites seront donc à terme reliées au sécheur D.

L'unité de séparation S2 reste la même tant que les premier et deuxième gaz de combustion 1 et 1bis ont le même débit partiel de CO2. L'unité S2 opère selon un procédé de condensation partielle et/ou de distillation et/ou de solidification afin de produire du CO2 à une pureté ciblée (par exemple un produit final 4 sous forme de flux gazeux de CO2 pur (supérieur à 99,9%) à 10 bar. L'unité S2 produit également un fluide 5bis appauvri en CO2 par rapport au gaz qui alimente l'unité S2. Afin d'améliorer la récupération du CO2 au cours de ce processus, le fluide 5 bis provenant de S2 peut être envoyé vers l'unité de pré-concentration S1 de la [FIG.2], en y séparant le flux 5bis en deux flux, l'un enrichi en CO2 et l'autre à plus faible teneur en CO2. Le flux riche en CO2 peut être renvoyé à l'étape de compression C2 comme un gaz auxiliaire.

Le compresseur C1 ne sert plus.

[FIG.3] illustre une disposition différente. Le principe reste la même que celui de la [FIG.2] puisque le deuxième gaz 1bis ayant la nouvelle teneur en CO2 supérieure à 50%mol et typiquement supérieure à 70%mol de concentration de CO2, permet de contourner l'unité de pré-concentration S1 et de passer directement comme gaz 2 bis à l'étape de séparation S2, après compression dans le compresseur C1 et séchage dans D1. Le deuxième gaz est comprimé dans le premier compresseur C1, avant d'être envoyé à l'unité de séparation, sans avoir été comprimé entre le premier compresseur et l'unité de séparation. Ici le deuxième gaz 1 bis contient de l'eau, au moins un composant plus léger que le CO2 ainsi que 90 %mol CO2 en base sèche dans les conditions de début d'exploitation (SOR) et à 75 %mol CO2 dans les conditions de fin d'exploitation (EOR) pour tenir compte de l'augmentation de l'entrée d'air parasite avant les grands arrêts). L'unité S2 opère selon un procédé de condensation partielle et/ou de distillation et/ou de solidification afin de produire du CO2 à une pureté ciblée (par exemple un produit final 4 sous forme de flux gazeux de CO2 pur (supérieur à 99,9%) à 10 bar. L'unité S2 produit également un fluide 5 bis appauvri en CO2 par rapport au gaz 2 bis qui alimente l'unité S2. L'unité de pré-concentration S1 PSA serait à nouveau utilisée pour améliorer la récupération du CO2 en enrichissant le gaz 5 bis provenant de l'unité S2 et en recyclant un gaz auxiliaire enrichi en CO2 dans le processus principal en l'envoyant à l'entrée du compresseur C1. La différence consiste à utiliser le compresseur C1 plutôt que le compresseur C2 pour comprimer les gaz de combustion. Le compresseur C1 est en effet déjà équipé du matériel et de l'agencement adéquats avec des cuves de séchage.

Cependant, comme les gaz de combustion ont un débit plus faible, le compresseur C1 devrait être conçu initialement avec plusieurs machines en parallèle afin de maintenir une bonne performance de compression même pour un débit plus faible. Le poids moléculaire plus élevé du gaz, dû à une teneur plus élevée en CO2, permettra au compresseur C1 de comprimer le gaz 1bis à un niveau de pression plus élevé que dans la [FIG.1], atteignant ainsi la pression typique nécessaire à l'unité de séparation S2. Le compresseur C2 ne sert plus.

Il sera compris que le premier gaz 1 ou le deuxième gaz 1 bis ne contient pas nécessairement de l'eau et que la présence des sécheurs D n'est pas essentielle. De même si le premier gaz 1 contient de l'eau et le deuxième gaz 1 bis n'en contient pas, les sécheurs D ne serviront plus après les modifications. Dans ce cas, le gaz 1bis du premier ou deuxième compresseur C1, C2 est envoyé directement à l'unité de séparation S2.

### Exemple

Le gaz de combustion 1 est envoyé à l'unité de capture du carbone au cours de la première phase d'exploitation correspondant à la [FIG.1] :

**[TAB.1]**

| Première Phase d'Opération | | | | | | |
|---|---|---|---|---|---|---|
| Débit | | (1) | (2) | (3) | (4) | (5) |
| Débit molaire sec | Nm³/h | 265178 | 306408 | 153562 | 81158 | 71687 |
| Pression | bara | 1.0 | 9.0 | 1.0 | 30.0 | 10.0 |
| CO₂ ( Base Sèche) | mol%v | 31.40% | 30.7% | 65.7% | 100% | 26.4% |
| Azote (Base Sèche) | mol%v | 65.24% | 65.5% | 32.4% | 0% | 69.6% |
| Oxygène (Base Sèche) | mol%v | 3.35% | 3.80% | 1.9% | 0% | 4.0% |

Pour cette phase de fonctionnement, le procédé de la [FIG.1] est utilisé. Le premier gaz de combustion 1 est comprimé dans le compresseur C1 jusqu'à -9bara, puis séchés dans D1. Ce flux est pré-concentré dans l'unité de préconcentration PSA S1, ce qui permet d'obtenir un flux contenant -66% de CO2 mol%. Il est ensuite comprimé dans le compresseur C2 pour atteindre 24 bars avant d'être envoyé dans la section opérant à basse température S2 où une produit final 4 est réalisé avec un flux gazeux de CO2 d'une pureté >99% mol%. Après une modernisation de la cimenterie qui est passée à un mode d'oxycombustion, le procédé correspondant au tableau suivant.

**[TAB.2]**

| Deuxième Phase d'Opération (Oxy Mode) | | | | | |
|---|---|---|---|---|---|
| Débit | | (1) | (2bis) | (4) | (5bis) |
| Débit molaire sec | Nm3/h | 92518 | 100425 | 81158 | 17137 |
| Pression | bara | 1.0 | 24.0 | 30.0 | 10.0 |
| CO2 (Base sèche) | mol%v | 90.00% | 88.5% | 100% | 30.0% |
| Azote (Base sèche) | mol%v | 8.00% | 9.2% | 0% | 55.7% |
| Oxygène (Base sèche) | mol%v | 2.00% | 2.3% | 0% | 14.3% |

| | | | | | |
|---|---|---|---|---|---|
| Deuxième phase de fonctionnement (mode Oxycombustion) | | | | | |

Ce deuxième gaz de combustion (1bis) a un débit plus faible que le premier gaz 1 mais une concentration de CO2 plus élevée. Il conserve le même débit partiel de CO2. Pour purifier ce nouveau gaz de combustion, on peut utiliser [FIG.2] ou [FIG.3]. Dans le cas de la [FIG.3], le deuxième gaz de combustion 1bis est envoyé au même compresseur C1 que dans la [FIG.1]. Une configuration 2*50% pour la première phase ([FIG.1]) est nécessaire pour cette machine afin de traiter un débit beaucoup plus faible (1bis) par rapport à 1. Ainsi, au cours de la deuxième phase de fonctionnement, seul un compresseur C1 sur deux en parallèle continuera à fonctionner. Le poids moléculaire plus élevé du1bis lui permet d'atteindre -24bara à la sortie du même compresseur. Ce gaz est envoyé dans les mêmes sécheurs D1 que dans la phase précédente, puis directement envoyé comme gaz 2 bis dans la section inchangée S2. Un flux de production (4) est produit dans les mêmes conditions que la phase précédente. Un flux riche en CO2 -30% mol% CO2 (5bis) est recyclé dans l'unité de prétraitement S1 afin d'améliorer la récupération du CO2. Sa composition est très proche du flux (2) dans [FIG.1], ce qui signifie que cette unité de prétraitement S1 est capable dans [FIG.3] de concentrer ce flux (5bis) de 30% mol% CO2 jusqu'à -70% mol% CO2. Il est ensuite recyclé à l'entrée du processus.

Typiquement **il** est nécessaire d'ajuster le temps de cycle si l'unité S1 est un PSA ou la pression de fonctionnement si l'unité S1 est un système de séparation membranaire.

Les principaux avantages de cette innovation sont de :
- Permettre une réduction de l'empreinte carbone en phase précoce (avant la finalisation de la " meilleure technologie de sa catégorie ") à l'aide d'un schéma de capture du carbone temporaire
- Permettre une réorganisation future du schéma de capture du carbone ci-dessus afin d'optimiser son fonctionnement dans le cadre de la meilleure solution technologique de sa catégorie
- Réduire les coûts de réorganisation du schéma de capture du carbone ci-dessus en maximisant la réutilisation de l'équipement existant et en optimisant le fonctionnement de ce schéma après la réorganisation.

## Revendications

1. Procédé de capture de CO2 dans une unité de capture pour purifier le CO2 présent dans un premier gaz de combustion (1) à concentration de CO2 inférieure à 45%mol et typiquement inférieure à 30%mol provenant d'au moins un émetteur et pour traiter un deuxième gaz de combustion (1 bis) à concentration plus élevée, à savoir supérieure à 50%mol et typiquement supérieure à 70%mol de concentration de CO2 dans la même unité de capture suite à des modifications dans lequel
i. Selon un premier mode de fonctionnement, le premier gaz de combustion est comprimé dans un premier compresseur (C1), le deuxième gaz n'étant pas envoyé au premier compresseur (C1), le premier gaz comprimé étant optionnellement séché par des sécheurs (D), puis envoyé à une unité de préconcentration (S1) pour produire un troisième gaz (4) contenant au moins 50% mol CO2, voire au moins 70% CO2 et le troisième gaz est envoyé de l'unité de préconcentration à un deuxième compresseur et du deuxième compresseur à une unité de séparation de CO2 par condensation partielle et/ou distillation et/ou solidification (S2) pour produire du CO2 comme produit à une concentration de CO2 voulue et
ii. Selon un deuxième mode de fonctionnement, le premier gaz n'est plus envoyé au premier compresseur, les connexions de l'unité de capture de CO2 sont modifiées pour ne pas envoyer de deuxième gaz à l'unité de préconcentration et ne plus envoyer de deuxième gaz de l'unité de préconcentration à l'unité de séparation et ensuite l'unité modifiée est utilisée pour purifier le CO2 présent dans le deuxième gaz de combustion (1bis) provenant de préférence de l'au moins un émetteur, le deuxième gaz étant comprimé dans un compresseur (C1, C2) et envoyé à l'unité de séparation de CO2 par condensation partielle et/ou distillation et/ou solidification (S2) pour s'y séparer sans avoir été enrichi en CO2, dans lequel selon le deuxième mode de fonctionnement
a) le deuxième gaz est comprimé dans le premier compresseur (C1) avant d'être envoyé à l'unité de séparation, sans avoir été comprimé entre le premier compresseur et l'unité de séparation ou
b) le deuxième gaz est comprimé dans le deuxième compresseur (C2), sans avoir été comprimé dans le premier compresseur ou un autre compresseur.

2. Procédé selon la revendication 1 dans lequel suite aux modifications des connexions, l'unité de capture de CO2 est utilisée selon le deuxième mode de fonctionnement pour purifier le CO2 présent dans le deuxième gaz de combustion (1bis) provenant de préférence de l'au moins un émetteur et contenant de l'eau, le deuxième gaz étant comprimé dans un compresseur, séché dans les sécheurs (D) et envoyé à l'unité de séparation de CO2 par condensation partielle et/ou distillation et/ou solidification (S2) pour s'y séparer sans avoir été enrichi en CO2 dans lequel
c) le deuxième gaz est comprimé dans le premier compresseur (C1) avant d'être séché dans les sécheurs (D) ou
d) le deuxième gaz est comprimé dans le deuxième compresseur (C2), sans avoir été comprimé dans le premier compresseur avant d'être séché dans les sécheurs (D) et de nouveau comprimé dans le deuxième compresseur (C2).

3. Procédé selon la revendication 1 ou 2 dans lequel l'au moins un émetteur comprend un four à ciment, une unité de production de chaux et/ou un haut fourneau d'une aciérie.

4. Procédé selon l'une des revendications 1 ou 2 ou 3 dans lequel la concentration en CO2 du deuxième gaz de combustion (1 bis) est égale ou supérieure à celle du troisième gaz (3).

5. Procédé selon l'une des revendications précédentes dans lequel après les modifications un gaz ( 5bis) produit par l'unité de séparation de CO2 qui est appauvri en CO2 par rapport au gaz alimentant l'unité de séparation de CO2 par condensation partielle et/ou distillation et/ou solidification (S2) est envoyé se séparer dans l'unité de préconcentration (S1) formant un gaz auxiliaire contenant plus de CO2 que le gaz appauvri en CO2 et le gaz auxiliaire est envoyé pour être pressurisé au premier compresseur (C1) pour la variante a) ou c) ou au deuxième compresseur (C2) pour la variante b) ou d).

6. Procédé selon l'une des revendications précédentes dans lequel le deuxième gaz (1bis) contient de l'eau et le deuxième compresseur (C2) est en acier inoxydable avant les modifications.

7. Procédé selon l'une des revendications précédentes dans lequel aucun gaz n'est comprimé dans le deuxième compresseur (C2) pour la variante a) ou c) ou dans le premier compresseur (C1) pour la variante b) ou d).

8. Procédé selon l'une des revendications précédentes dans lequel pour la variante a) ou c), le premier compresseur (C1) comprend un premier étage de compression en parallèle avec un deuxième étage de compression et dans lequel avant les modifications le premier gaz (1) est comprimé par le premier et deuxième étage en même temps et après les modifications, le deuxième gaz (1bis) est comprimé par le premier étage mais pas par le deuxième étage.

9. Procédé selon l'une des revendications précédentes dans lequel le débit (1bis) du deuxième gaz est inférieur à celui du premier gaz (1).

10. Appareil de capture de CO2 utilisé pour purifier le CO2 présent dans un premier gaz de combustion (1) comprenant un premier compresseur (C1), des sécheurs (D), une unité de préconcentration (S1), un deuxième compresseur (C2), une unité de séparation de CO2 par condensation partielle et/ou distillation et/ou solidification (S2), des moyens pour envoyer un gaz du premier compresseur aux sécheurs, des moyens pour envoyer un gaz des sécheurs à l'unité de préconcentration, des moyens pour envoyer un gaz enrichi en CO2 de l'unité de préconcentration au deuxième compresseur, des moyens pour envoyer le gaz comprimé dans le deuxième compresseur à l'unité de séparation pour produire du CO2 comme produit à une concentration de CO2 voulue **caractérisé en ce que** le deuxième compresseur est en acier inoxydable et comprend un étage intermédiaire relié à une conduite d'amenée de fluide pour amener du fluide directement à la sortie de l'étage intermédiaire sans être passé par l'étage intermédiaire du deuxième compresseur en amont de l'étage intermédiaire et à une conduite de sortie de fluide pour sortir du fluide directement en amont de l'entrée de l'étage intermédiaire après passage dans un étage du deuxième compresseur en amont de l'étage intermédiaire.

11. Appareil selon la revendication 10 dans lequel le premier compresseur (C1) comprend un premier étage de compression en parallèle avec un deuxième étage de compression.
